# FASCICULE DE BREVET EUROPEEN

(11) **EP 1 663 688 B1**
(45) Date de publication et mention de la délivrance du brevet: **14.03.2007**
(21) Numéro de dépôt: 04787351.8
(22) Date de dépôt: 10.09.2004
(51) Int. Cl.: B60K 6/04

(54) **TRANSMISSION INFINIMENT VARIABLE A DERIVATION DE PUISSANCE A DEUX MODES DE FONCTIONNEMENT COMPORTANT TROIS TRAINS EPICYCLO DA UX**
ZWEI PLANETENGETRIEBE UMFASSENDES, STUFENLOS VERSTELLBARES LEISTUNGSVERZWEIGUNGSGETRIEBE MIT ZWEI BETRIEBSMODEN
INFINITELY-VARIABLE POWER-BRANCHING TRANSMISSION WITH TWO OPERATING MODES, COMPRISING THREE PLANETARY TRAINS

(30) Priorité: 12.09.2003 FR 0310727
(43) Date de publication de la demande: 07.06.2006
(73) Titulaire: Renault s.a.s., 92100 Boulogne Billancourt (FR)
(72) Inventeur: PICHON, Yves, F-92100 Boulogne Billancourt (FR)
(74) Mandataire: Rougemont, Bernard
(86) Numéro de dépôt international: PCT/FR2004/002302
(87) Numéro de publication internationale: WO 2005/025910

(56) Documents cités:
- DE-A- 19 606 771
- FR-A- 2 823 156
- US-B1- 6 358 173

## Description

La présente invention concerne une transmission à dérivation de puissance permettant d'obtenir une variation continue de rapport de marche arrière en marche avant, en passant par une position particulière, dite « neutre en prise », où la vitesse de déplacement du véhicule est nulle, pour un régime quelconque du moteur thermique.

Plus précisément, elle a pour objet une transmission infiniment variable à dérivation de puissance à deux modes de fonctionnement, dont les éléments constitutifs sont répartis entre deux voies de puissance reliant en parallèle le moteur thermique aux roues du véhicule, ces moyens incluant au moins deux trains épicycloïdaux deux machines électriques, et un étage de réduction.

La publication US 6 358 173 décrit une transmission avec les caractéristiques du préambule de la revendication 1.

Par la publication FR2823156, on connaît une transmission du type indiqué ci-dessus, dans laquelle les deux modes de fonctionnement sont établis au travers de deux étages de réduction montés en parallèle entre les deux trains épicycloïdaux, et sollicités respectivement dans le premier et dans le second mode de fonctionnement.

La présente invention a pour but de modifier une telle transmission, de manière à la rendre plus compacte, à réduire son coût, et à faciliter son intégration dans le véhicule.

Dans ce but, elle propose de remplacer les étages de réduction parallèles de la voie de dérivation de puissance, par un troisième train épicycloïdal.

Conformément à l'invention, ce troisième train épicycloïdal coopère avec des organes de commande pour établir les deux modes de fonctionnement de la transmission, et pour commuter entre des derniers.

Selon un mode de réalisation préféré de l'invention, la fermeture d'un premier organe de commande assure l'immobilisation relative des éléments constitutifs du troisième train et la rotation en bloc de celui-ci, et la fermeture d'un deuxième organe de commande assure l'immobilisation d'un élément du troisième train par rapport au carter.

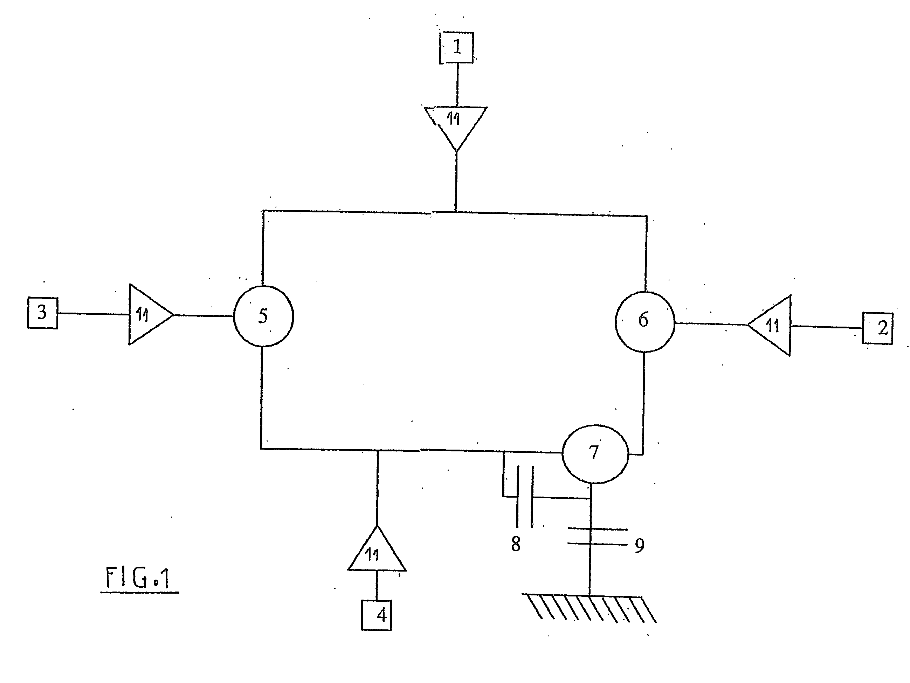

D'autres caractéristiques et avantages de la présente invention apparaîtront clairement à la lecture de la description suivante, en se reportant aux dessins annexés, sur lesquels la figure 1 illustre schématiquement le principe de l'invention.

Les éléments constitutifs de cette transmission sont répartis entre deux voies de puissance reliant en parallèle le moteur thermique 1 aux roues 3 du véhicule. Conformément au schéma, ces moyens incluent deux machines électriques 2, 4 formant un variateur, plusieurs trains épicycloïdaux 5, 6, 7, deux organes de commande de 8, 9, et plusieurs étages de réduction 11.

Sur ce schéma, on reconnaît les deux voies de puissance reliant le moteur thermique 1 aux roues 3 du véhicule. La première voie, ou voie principale de transmission de puissance, rejoint la seconde dans le premier train épicycloïdal 5. La première machine électrique 2, rejoint la voie de dérivation de puissance dans le second train épicycloïdal 6 Les deux machines électriques sont séparées par un troisième train épicycloïdal 7, associé à ses deux organes de commandes 8, 9.

Enfin, le moteur thermique 1, les roues et les deux machines électriques 2, 4 sont connectées à des étages de réduction 11, dont la disposition particulière indiquée sur la figure n'a aucun caractère limitatif pour la portée de l'invention, car on peut envisager un nombre et/ou une disposition différente de ces étages de réduction, sans sortir du cadre de celle-ci.

Cette transmission dispose d'une voie principale de puissance par laquelle transite une part importante du couple entre le moteur thermique et les roues, et d'une voie secondaire ou de dérivation de puissance sur la quelle sont disposées les deux machines électriques formant variateur, de manière à réaliser une transmission infiniment variable du couple entre le moteur et les roues.

Elle dispose de deux modes de fonctionnement dans lesquels les premiers ou les seconds moyens de commande du troisième train épicycloïdal 8, 9 sont respectivement sollicités.

Ces deux modes de fonctionnement visent à élargir les plages de fonctionnement de la transmission infiniment variable. Il correspondent à l'établissement de deux rapports de démultiplication différents dans le troisième train épicycloïdal 7, grâce à la sollicitation respective des premiers et des seconds moyens de commande 8, 9 associés.

La transmission infiniment variable illustrée par les figures est dite à un « point d'adaptation » et à « entrée couplée », car la dérivation de puissance en sortie du moteur thermique est assurée par un couple de pignons de dérivation de puissance (non représenté), alors que la réunion des deux voies de puissance avant les roues, s'effectue dans un train épicycloïdal assembleur 5.

Toutefois, cette disposition particulière n'a aucun caractère limitatif, et l'invention s'applique également à toute transmission infiniment variable à dérivation de puissance à sortie couplée, dans laquelle on a un train diviseur de couple en sortie du moteur et un couple de pignons rassembleurs avant les roues. Dans les mêmes conditions, l'invention peut s'appliquer à toute transmission infiniment variable à dérivation de puissance « à deux points d'adaptation », dans laquelle on a un train épicycloïdal diviseur de couple et un train rassembleur de couple (ce qui porte à quatre le nombre total de trains, en comptant le train 6, associé à la seconde machine électrique et le train de changement de mode de fonctionnement 7).

Comme indiqué sur le schéma, les organes de changement de mode 8, 8 sont associés à ce troisième train 7. Conformément à l'invention, ces organes de commande peuvent être constitués par des freins, des embrayages, ou des systèmes de crabots.

Selon le mode de réalisation particulier de l'invention illustré par le schéma, la fermeture du premier organe de commande 8 assure l'immobilisation relative des éléments constitutifs du troisième train et la rotation en bloc de celui-ci, et la fermeture du deuxième organe de commande 9 assure l'immobilisation d'un élément du troisième train par rapport au carter. Comme indiqué ci-dessus la fermeture du premier ou du second organe de commande 7, 8, place respectivement la transmission dans son premier ou dans son second mode de fonctionnement.

Dans ce cadre, une disposition particulièrement avantageuse, mais non limitative de l'invention, consiste à disposer le premier organe de commande 8 entre la couronne et le porte-satellites du troisième train 7, et le second organe de commande entre le porte-satellites du troisième train épicycloïdal et le carter.

Ainsi, dans le premier mode de fonctionnement, le premier organe de commande 8 est fermé et le second 9 est ouvert. Le train 7 tourne en bloc, et le rapport de démultiplication introduit par celui-ci dans la voie de dérivation de puissance est égal à un. Dans le second mode, le premier organe 8 est ouvert, et le second organe 9 est fermé de manière à immobiliser un des éléments constitutifs du troisième train 7 par rapport au carter. Le train 7 introduit alors son rapport de démultiplication différent de un, dans la voie de dérivation de puissance.

Enfin, pendant le stade transitoire de changement de mode, les deux organes de commande peuvent être fermés simultanément, situation dans laquelle le troisième train 7 est immobilisé.

En conclusion, l'intérêt de remplacer les deux étages de réduction parallèles de la transmission à dérivation de puissance et deux modes de fonctionnement connue , par un troisième train planétaire, est d'obtenir une architecture plus compacte, où les trois trains peuvent être alignés le long d'un même axe. En effet, la solution antérieure impliquait de disposer un arbre spécifique pour chaque étage de réduction, alors que l'invention permet d'aligner le troisième train épicycloïdal avec les deux premiers. Enfin, si l'invention peut être mise en oeuvre en utilisant des freins, des embrayages ou des systèmes à crabots, l'utilisation de ces derniers est de loin la plus économique.

## Revendications

1. Transmission infiniment variable à dérivation de puissance à deux modes de fonctionnement, dont les éléments constitutifs sont répartis entre deux voies de puissance reliant en parallèle le moteur thermique (1) aux roues (3) du véhicule, ces moyens incluant au moins deux premiers trains épicycloïdaux (5, 6), deux machines électriques (2, 4) et un étage de réduction (11), **caractérisée en ce qu'**elle comporte des organes de commande (8, 9) coopérant avec un troisième train épicycloïdal (7) pour établir les deux modes de fonctionnement de la transmission et pour commuter entre des derniers, par engagement simultané pendant la phase transitoire de changement de mode

2. Transmission selon la revendication 1, **caractérisée en ce que** les deux machines électriques (2, 4) sont disposés de part et d'autre du troisième train épicycloïdal (7), sur la même voie de puissance que celui-ci.

3. Transmission selon la revendication 1, 2, **caractérisée en ce que** la fermeture d'un premier organe de commande (8), correspondant au premier mode de fonctionnement, assure l'immobilisation relative des éléments constitutifs du troisième train (7), et la rotation en bloc de celui-ci.

4. Transmission selon la revendication 1 ou 2, **caractérisée en ce que** la fermeture d'un second organe de commande (9), correspondant au second mode de fonctionnement de la transmission, assure l'immobilisation d'un élément du troisième train (7) par rapport au carter.

5. Transmission selon la revendication 1 ou 2, **caractérisée en ce qu'**au moins un organe de commande (8, 9) est constitué par un frein.

6. Transmission selon la revendication 1, ou 2, **caractérisée en ce qu'**au moins un des organes de commande (8, 9) est constitué par un embrayage.

7. Transmission selon la revendication 1 ou 2, **caractérisée en ce qu'**au moins un des organes de commande (8, 9) est constitué par un système de crabots.

8. Transmission selon l'une des revendications précédentes, **caractérisée en ce que** le premier organe de commande (8) est disposé entre la couronne et le porte-satellites du troisième train épicycloïdal (7).

9. Transmission selon la revendication 5, **caractérise en ce que** le second organe de commande (9) est disposé entre le porte-satellites du troisième train épicycloïdal (7) et le carter.

## Claims

1. Infinitely-variable power-branching transmission with two operating modes, the components of this transmission being distributed between two power paths connecting, in parallel, the combustion engine (1) to the vehicle wheels (3), these means including at least two first planetary gear trains (5, 6), two electrical machines (2, 4) and a reduction stage (11), **characterized in that** it has control means (8, 9) interacting with a third planetary gear train (7) to establish the two operating modes of the transmission and to switch between these modes, by simultaneous engagement during the transient phase of mode changing.

2. Transmission according to Claim 1, **characterized in that** the two electrical machines (2, 4) are positioned one on each side of the third planetary gear train (7), on the same power path as this train.

3. Transmission according to Claim 1 or 2, **characterized in that** the closing of a first control means (8), corresponding to the first operating mode, causes the relative immobilization of the components of the third gear train (7), and the rotation of this train as a whole.

4. Transmission according to Claim 1 or 2, **characterized in that** the closing of a second control means (9), corresponding to the second operating mode of the transmission, causes the immobilization of an element of the third gear train (7) with respect to the casing.

5. Transmission according to Claim 1 or 2, **characterized in that** at least one control means (8, 9) consists of a brake.

6. Transmission according to Claim 1 or 2, **characterized in that** at least one control means (8, 9) consists of a clutch.

7. Transmission according to Claim 1 or 2, **characterized in that** at least one control means (8, 9) consists of a system of dog teeth.

8. Transmission according to any one of the preceding claims, **characterized in that** the first control means (8) is placed between the ring and the planet carrier of the third planetary gear train (7).

9. Transmission according to Claim 5, **characterized in that** the second control means (9) is placed between the planet carrier of the third planetary gear train (7) and the casing.

## Patentansprüche

1. Stufenlos verstellbares Leistungsverzweigungsgetriebe mit zwei Betriebsmoden, dessen Bestandteile zwischen zwei Leistungswegen verteilt sind, über welche die Wärmekraftmaschine (1) mit den Rädern (3) des Fahrzeugs parallel geschaltet ist, wobei diese Mittel mindestens zwei erste Planetengetriebe (5, 6), zwei elektrische Maschinen (2, 4) und eine Untersetzungsstufe (11) umfassen, **dadurch gekennzeichnet, dass** es Stellglieder (8, 9) aufweist, die mit einem dritten Planetengetriebe (7) zusammenwirken, um die beiden Betriebsmoden des Getriebes herzustellen und um zwischen diesen Letzteren durch gleichzeitigen Eingriff während der Übergangsphase beim Wechseln des Betriebsmodus hin und her zu schalten.

2. Getriebe nach Anspruch 1, **dadurch gekennzeichnet, dass** die beiden elektrischen Maschinen (2, 4) zu beiden Seiten des dritten Planetengetriebes (7) auf dem gleichen Leistungsweg wie dieses angeordnet sind.

3. Getriebe nach Anspruch 1, 2, **dadurch gekennzeichnet, dass** das Schließen eines ersten, dem ersten Betriebsmodus entsprechenden Stellgliedes (8) die Blockierung der Bestandteile des dritten Planetengetriebes (7) relativ zueinander und die En-bloc-Drehung desselben gewährleistet.

4. Getriebe nach Anspruch 1 oder 2, **dadurch gekennzeichnet, dass** das Schließen eines zweiten, dem zweiten Betriebsmodus des Getriebes entsprechenden Stellgliedes (9) die Blockierung eines Elements des dritten Planetengetriebes (7) bezüglich des Gehäuses gewährleistet.

5. Getriebe nach Anspruch 1 oder 2, **dadurch gekennzeichnet, dass** wenigstens ein Stellglied (8, 9) aus einer Bremse besteht.

6. Getriebe nach Anspruch 1 oder 2, **dadurch gekennzeichnet, dass** wenigstens eines der Stellglieder (8, 9) aus einer Kupplung besteht.

7. Getriebe nach Anspruch 1 oder 2, **dadurch gekennzeichnet, dass** wenigstens eines der Stellglieder (8, 9) aus einem Klauensystem besteht.

8. Getriebe nach einem der vorstehenden Ansprüche, **dadurch gekennzeichnet, dass** das erste Stellglied (8) zwischen dem Kranz und dem Steg des dritten Planetengetriebes (7) angeordnet ist.

9. Getriebe nach Anspruch 5, **dadurch gekennzeichnet, dass** das zweite Stellglied (9) zwischen dem Steg des dritten Planetengetriebes (7) und dem Gehäuse angeordnet ist.
